# EUROPEAN PATENT APPLICATION

(11) **EP 4 270 748 A1**
(43) Date of publication of application: **01.11.2023**
(21) Application number: 23169495.1
(22) Date of filing: 24.04.2023
(51) Int. Cl.: H02M 1/00, H02M 3/24, H02M 7/44

(54) **INVERTER WITH SCALABLE DC/DC VOLTAGE BOOST CONVERTER**

(30) Priority: 27.04.2022 ES 202230382
(71) Applicant: Power Electronics España, S.L., 46160 Lliria (Valencia) (ES)
(72) Inventor: SALVO LILLO, David, 46160 Lliria (Valencia) (ES); SALVO LILLO, Abelardo, 46160 Lliria (Valencia) (ES); JUAN AGUILAR, Josué, 46160 Lliria (Valencia) (ES); CAMPS SORIANO, Jose Luis, 46160 Lliria (Valencia) (ES)
(74) Representative: Ungria López, Javier

(57) **Abstract**

The present invention relates to an inverter topology with a DC/DC voltage boost converter, which is also scalable. The arrangement of converters and power lines used in this topology makes it possible to maximize the efficiency of the energy conversion that takes place in photovoltaic plants or in any other system based on power transmission that use DC power lines, reducing the values of current used for a given power level. The inverter comprises two DC/DC converters (3,4) connected to one another and two DC/AC converters (5,6) connected to one another. The two DC/DC converters (3,4) are connected with the two DC/AC converters (5,6) by means of two buses (11-9, 12-10) consisting of three DC power lines (13, 14, 15) where one of the DC power lines (14) is common to the two buses (11-9, 12-10).

## Description

### FIELD OF THE INVENTION

The present invention is part of the creation of a converter topology that makes it possible to increase the energy conversion efficiency in systems that use DC power transmission lines.

The technical field of the invention falls within voltage conversion, and especially high voltages with high currents as occurs in power converters, motor controllers and solar and wind power generation systems, regardless of whether or not they use storage systems.

### BACKGROUND OF THE INVENTION

The renewable energy generation industry has undergone several changes over time in order to increase power transmission efficiency between the renewable source and electrical distribution systems.

Regarding the voltage values used, there is a clear tendency to increase voltages and reduce high working currents used in favor of energy transformation efficiency.

A limiting factor in power converters are the voltages that are capable of withstanding the active and passive elements forming them. The introduction of multilevel converters has made it possible to increase the working voltage in power conversion and, with it, efficiency has been improved. In addition, the greater number of voltage levels used makes it possible to improve the quality of the energy delivered to energy distribution systems. The design of the filtering stage used by each converter is strongly linked to the number of levels that a converter uses.

In general, in DC/AC converters, the use of high DC voltages makes it possible to work with higher AC voltages, thereby reducing the AC current used. The minimum working DC voltage is limited by the rectified AC voltage, while the upper limit is determined by the electrical limit of the components used.

In contrast, multilevel converters require a greater number of active elements. The increase in components causes the cost of this equipment to increase. Therefore, the most efficient solution is obtained from the compromise between the converter used and the characteristics of the converter of the wind or photovoltaic generation system, or motor controller powered by means of a DC bus.

The current trend in the design of photovoltaic fields is to increase its working voltage. The objective of the present invention is, as previously mentioned, to reduce the conduction losses that take place in the generation system by using lower DC currents to that end. From this point of view, the no-load voltage in photovoltaic fields increases at a speed similar to the development of converters used in energy conversion.

The electrical limit of the DC/AC converter relates the design of the photovoltaic field and the low-voltage AC line on which the generated energy is delivered.

When selecting the DC/AC converter and the low AC voltage used, the working voltage range in the DC bus, or the bus that connects to the renewable energy source, or battery, is being limited. To make this relationship independent, in some cases, DC/DC converters are used. With DC/DC converters, a constant working value can be set in the common bus, and the working range in the power source can be extended. The drawback is the increase in converters needed. Furthermore, if it is designed with a common bus, conduction losses increase, since such losses depend on the square of the current, and on the other hand, if it is done with multiple buses, the number of lines needed increases.

Another point of continuous improvement in photovoltaic generation systems are the maximum power point tracking algorithms. Previous studies have solved the problem for static and dynamic conditions with good results. On the other hand, in partial shade conditions, working with a single bus voltage makes it difficult to optimize these algorithms under partial shade conditions in photovoltaic fields. The use of different DC/DC converters helps the system to work at a more efficient point.

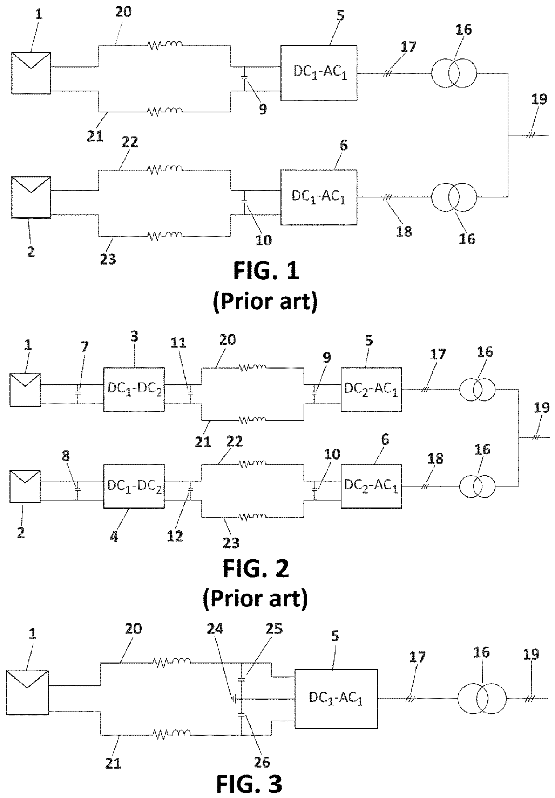

Figures 1 and 2 some prior art topologies used in energy transformation systems for transforming energy from DC photovoltaic fields to a high-voltage AC grid.

Figure 1 shows a simple diagram, where the system consists of one or more photovoltaic fields with an independent DC/AC converter. DC/AC converters 5, 6 deliver the energy generated in photovoltaic fields 1 and 2, respectively, to the distribution system (high-voltage AC line 19).

In Figure 2, DC/DC converters 3 and 4 are included between DC/AC converters 5 and 6 and photovoltaic fields 1 and 2 in the previous diagram. The second electrical diagram has a higher number of converters, increasing investment and maintenance costs. On the other hand, it results in a more efficient system in various aspects. On the one hand, it widens the range in which the photovoltaic solar field works, and it allows the use of higher voltages in the DC transmission line, thus reducing conduction losses.

The trend in generation or storage systems to work with increasingly higher voltages causes the design of the plant to also focus on the working potentials with respect to the ground of the system. An efficient design takes these voltages into account to reduce the cost of generating system isolation and maintenance.

The use of multilevel converters expands design options. Figures 3, 4, 5 and 6 show topologies used in photovoltaic generation systems.

Figure 3 shows a prior art inverter topology, where the ground reference has been located at the midpoint of the DC/AC converter. This configuration generates Vbus/2 and -Vbus/2 potentials in the DC transmission lines, where Vbus is the working voltage in the DC/AC converter.

Figure 4 depicts a prior art inverter with "isolated poles" topology.

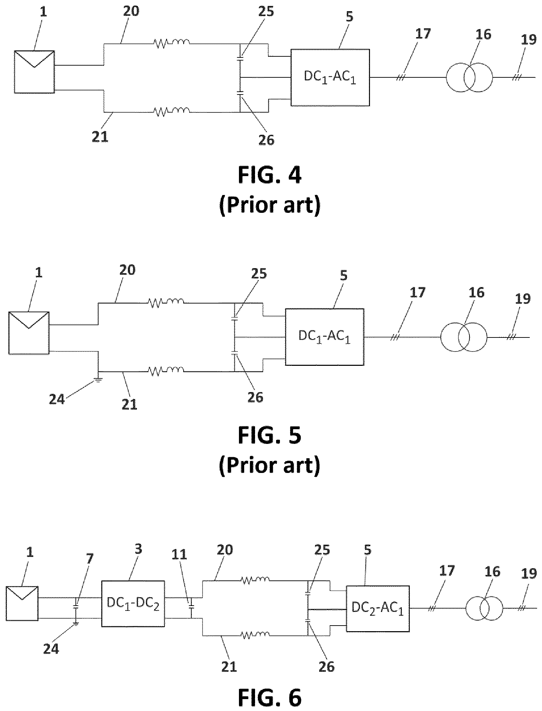

On the other hand, in Figure 5, also showing the prior art, the negative pole of the photovoltaic field is connected to ground. In systems using this configuration, Vbus potentials appear in the positive pole of the DC transmission line.

Figure 6 shows the diagram of a prior art inverter with a DC/DC converter and negative pole of the panels to ground. In this case, the type of DC/DC converter, whether galvanically isolated or not, will condition the working potential of the DC transmission line.

Therefore, the design of a photovoltaic generation or energy storage system, either due to the voltage level selected, or the topology to be used, condition the level of isolation required.

### DESCRIPTION OF THE INVENTION.

An inverter with a scalable DC/DC voltage boost converter is disclosed. The topology of the inverter of the present invention makes it possible to increase efficiency in systems that transfer power from a renewable or storage source to the power grid, thereby reducing the number of DC transmission lines needed.

The present invention has the following advantages:
- The new power conversion topology described is scalable to *N*+*1* DC levels using *N* DC/DC and DC/AC converters;
- It allows the reduction of constructive elements in the inverter (reduction of the number of conductors in DC transmission);
- It makes it possible to raise the DC transmission voltage, making it independent of the voltage of the power source.
- It makes it possible to raise the AC transmission voltage, making it independent of the voltage of the power source.
- It reduces conduction losses as a whole.
- It allows the use of different DC/DC converters by helping the system to work at a more efficient tracking point (MPPT).

Therefore, an inverter with a new topology for DC power generation systems such as wind and/or photovoltaic plants, and/or storage plants, based on using *N* converters (multilevel or not) in series to generate a system with *N*+*1* DC voltage levels. The voltage level used in the common DC bus is constant and independent of the most efficient working point of the photovoltaic, wind or storage field.

The inverter with a scalable DC/DC voltage boost converter of the present invention comprises: an AC/AC transformer; at least two DC/DC converters connectable to corresponding DC voltage sources by means of corresponding buses; and at least two DC/AC converters connected to the AC/AC transformer by means of corresponding buses (different from the previous ones). Wherein the two DC/DC converters are connected in parallel to one another. The two DC/AC converters are connected in parallel to one another. And the two DC/DC converters are connected in series with the two DC/AC converters, respectively, by means of two buses (different from all the previous ones) consisting of three DC power lines wherein one of the DC power lines is common to the two buses. The inverter has a floating field topology.

In one embodiment of the invention, the inverter with a scalable DC/DC voltage boost converter of the present invention may further comprise: N-2 DC/DC converters connectable to corresponding DC voltage sources by means of N-2 buses; and N-2 DC/AC converters connected to the AC/AC transformer by means of N-2 buses. The N-2 DC/DC converters are connected in parallel to one another and also in parallel to the two previous DC/DC converters, the N-2 DC/AC converters are connected in parallel to one another and to the two previous DC/AC converters. Therefore, in summary, this embodiment of the invention includes N DC/DC converters connectable to N DC voltage sources by means of N buses; and N DC/AC converters connected to the AC/AC transformer (with N windings or to N transformers with a single winding) by means of N buses. The N DC/DC converters are connected in series with the N DC/AC converters by means of respective N buses consisting of N+1 DC power lines, of which N-1 DC power lines are common to every other bus of the N buses. That is, every other adjacent bus of the N buses consists of three DC power lines where one of them is common to the two buses.

In one embodiment of the invention, the DC/DC converters may be galvanically isolated. Optionally, the bus that connects the DC/DC converters to the DC voltage sources can have a pole to ground.

In one embodiment of the invention, the common line of the buses that connect the DC/DC converters with the DC/AC converters may be connected to ground.

In one embodiment of the invention, the AC/AC transformer can be one AC/AC transformer for each DC/AC converter, or there can be an AC/AC transformer with as many windings (multi-winding) as there are DC/AC converters.

In one embodiment of the invention, the DC/DC converters may be individually controlled by "MPPT" (Maximum Power Point Tracking) algorithms. This makes it possible to improve the efficiency of the inverter with a DC/DC voltage boost converter of the present invention.

In one embodiment of the invention, the DC/DC voltage boost converters can be close to the (photovoltaic, wind, storage) DC voltage sources, reducing the number of DC power transmission lines used to that end. This makes it possible to increase the efficiency of the power line that joins the DC voltage sources and the DC/DC converters.

### BRIEF DESCRIPTION OF THE FIGURES

- Figure 1.: This figure shows a topology of a prior art inverter connected to a DC photovoltaic solar field and the high-voltage AC grid.
- Figure 2.: This figure shows another topology of a prior art inverter connected to a DC photovoltaic solar field and the high-voltage AC grid.
- Figure 3.: This figure shows another topology of a prior art inverter with the midpoint of the DC/AC converter being connected to ground.
- Figure 4.: This figure shows another topology of a prior art inverter in an isolated pole configuration.
- Figure 5.: This figure shows another topology of a prior art inverter in a negative pole of panels to ground configuration.
- Figure 6.: This figure shows another topology of a prior art photovoltaic inverter with a DC-DC converter on the photovoltaic field side, in a negative pole of panels to ground configuration.

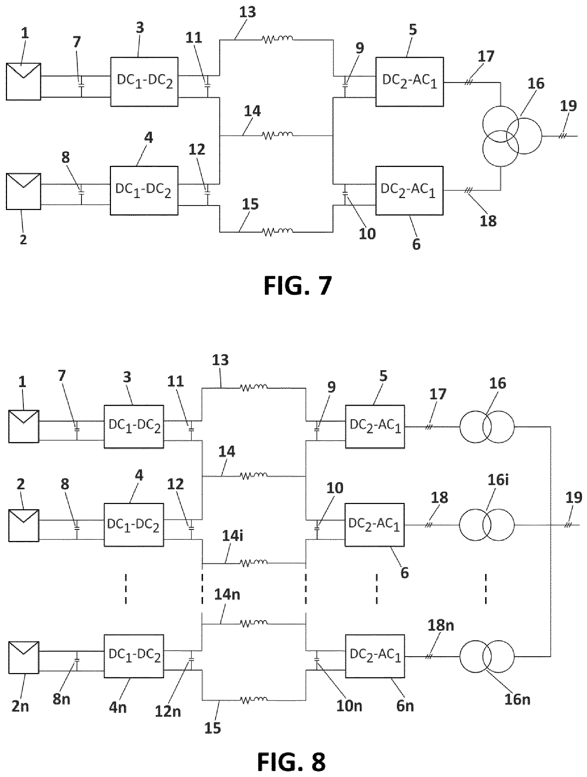

- Figure 7.: This figure shows the inverter with a DC/DC voltage boost converter according to the present invention in a floating field configuration.
- Figure 8.: This figure shows the inverter of the present invention in a floating field configuration and with N DC/DC converters and N DC/AC converters.

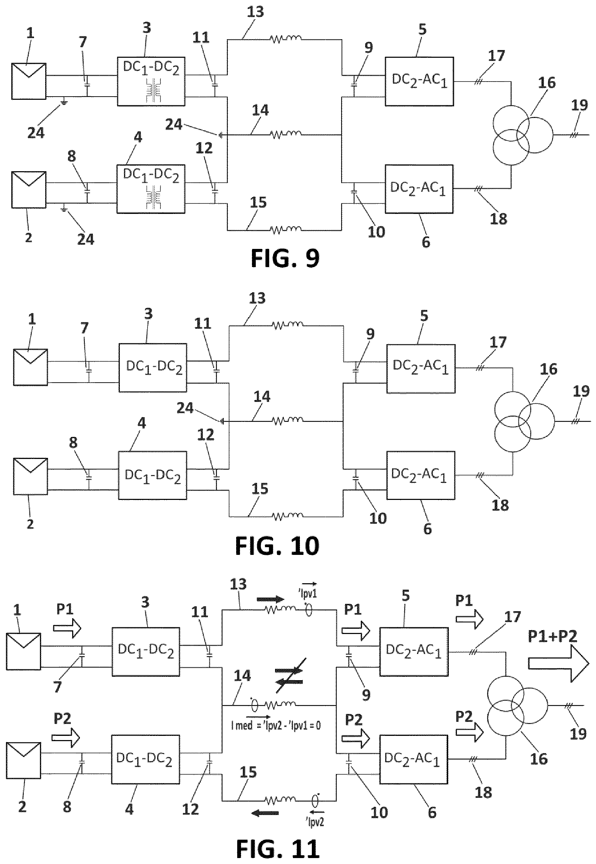

- Figure 9.: This figure shows the inverter with a DC/DC voltage boost converter according to the present invention in a common DC power line to ground configuration and with two galvanically isolated DC/DC converters.
- Figure 10.: This figure shows the inverter with a DC/DC voltage boost converter according to the present invention with two DC/DC converters and two DC/AC converters in a common DC power line to ground configuration.
- Figure 11.: This figure shows the inverter of the present invention with two DC/DC converters and two DC/AC converters in a floating field configuration as shown in Figure 7, explaining the powers and currents for a symmetrical power flow.

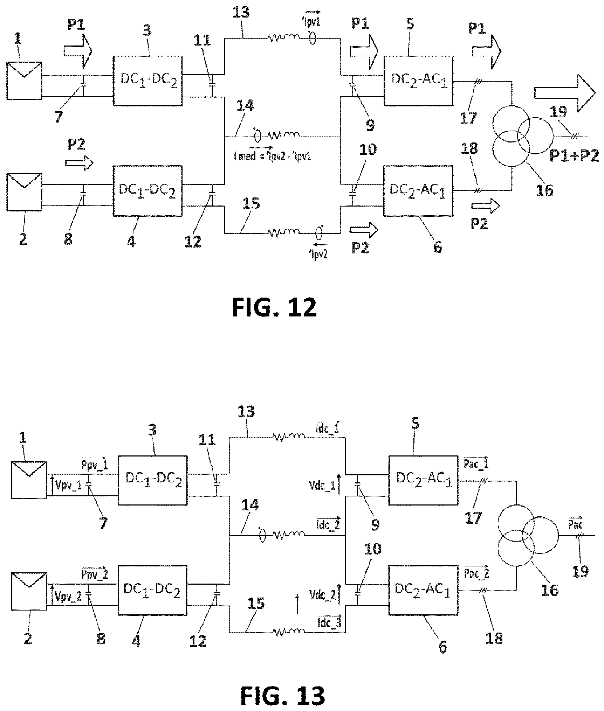

- Figure 12.: This figure shows the inverter of the present invention with two DC/DC converters and two DC/AC converters in a floating field configuration as shown in Figure 7, explaining the powers and currents for an asymmetrical power flow.
- Figure 13.: This figure shows the inverter of the present invention with two DC/DC converters and two DC/AC converters in a floating field configuration as shown in Figure 7, indicating the parameters (powers, voltages and currents) for a symmetrical power flow up to t=1 second, and subsequently an asymmetrical power flow.

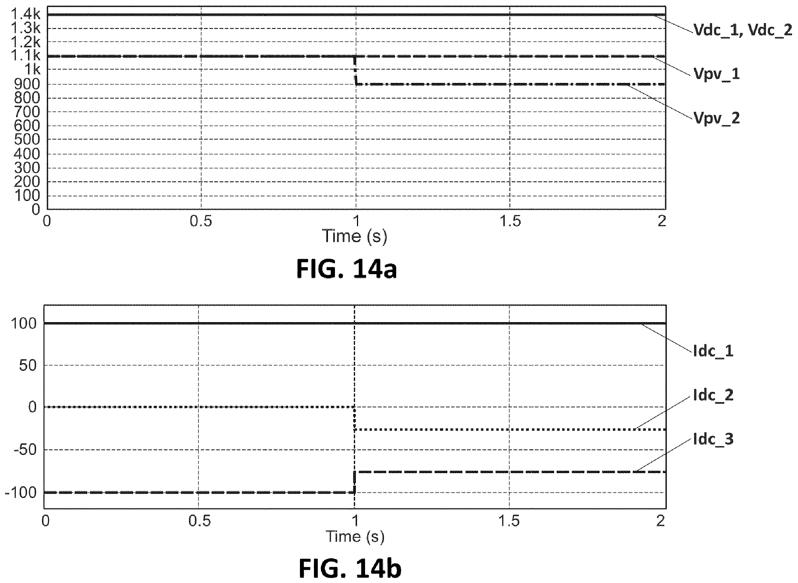

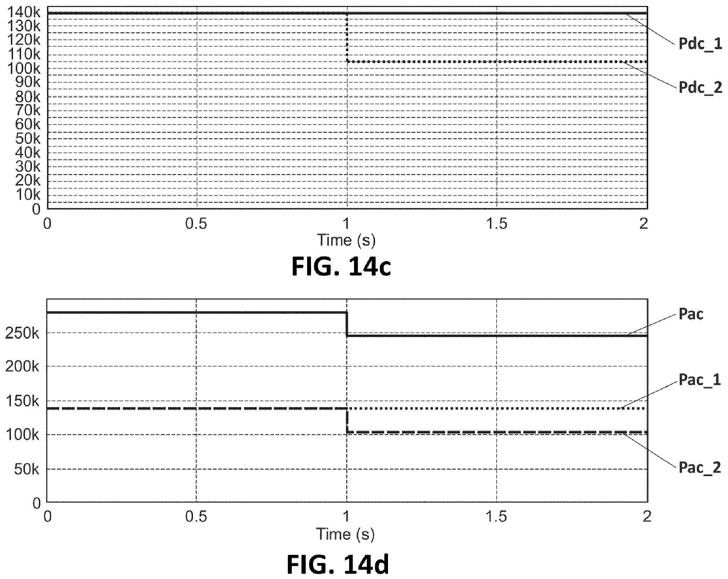

- Figure 14. a), b), c) and d).: - These figures show the values of power, current and voltage indicated in Figure 13.

### DESCRIPTION OF AN EMBODIMENT OF THE INVENTION

### List of reference numbers:

1, 2: photovoltaic field;
3, 4: DC-DC voltage boost converter;
5, 6: DC-AC converter connection to high-voltage AC grid;
7, 8: input bus of the DC-DC voltage boost converter;
9, 10: input bus of the DC-AC converter;
11, 12: output bus of the DC-DC voltage boost converter;
13, 15: DC power lines;
14, 14i, 14n: N-1 common DC power lines;
16: multiple winding AC transformer;
17, 18: AC low-voltage buses/lines;
19: high-voltage AC line - grid;
20, 21, 22 and 23: prior art DC power lines;
24: ground;
25 and 26: multilevel DC/AC converter half-buses.

The most basic topology of the inverter with a DC/DC voltage boost converter of the present invention is shown in Figure 7. The inverter shown in Figure 7 comprises:
- buses 7, 8, 9, 10, 11, 12, 17 and 18;
- AC/AC transformer 16, which is multi-winding although it could be replaced by two single-winding AC/AC transformers located at the output of DC/AC converters 5 and 6;
- the two DC/DC converters 3 and 4 connected to two DC voltage sources 1 and 2 by means of the two buses 7 and 8, respectively; and
- the two DC/AC converters 5 and 6 the outputs of which are connected to the AC/AC transformer 16 by means of buses 17 and 18.

The two DC/DC converters 3 and 4 are connected in parallel to one another by means of buses 11 and 12. The two DC/AC converters 5 and 6 are connected in parallel to one another by means of buses 9 and 10. The two DC/DC converters 3 and 4 are connected in series with the two DC/AC converters 5 and 6 by means of buses 9, 11, 10 and 12 joined by the three DC power lines 13, 14 and 15, wherein DC power line 14 is common to buses 9, 11, 10 and 12. That is, two connection buses are formed with three DC power lines (13, 14 and 15) and one DC power line is common (14) to both buses, to connect the DC/DC converters 3 and 4 with the DC/AC converters 5 and 6. The topology shown in Figure 7 is referred to as a "floating field topology".

The inverter with a DC/DC voltage boost converter of the present invention is scalable in the number of converters used as shown in Figure 8. Figure 8 depicts the present invention for N+1 DC voltage levels, N DC/DC converters and N DC/AC converters.

The inverter with a DC/DC voltage boost converter of the present invention shown in Figure 8 comprises:
- buses 7, 8 to 8n, 9, 10 to 10n, 11, 12 to 12n, 17 and 18 to 18n;
- the N AC/AC transformers 16 to 16n, which could be replaced with a single "multi-winding" transformer with N windings;
- the N DC/DC converters 3, 4 to 4n connected to N DC voltage sources 1, 2 to 2n by means of buses 7 and 8 to 8n, respectively; and
- the N DC/AC converters 5 and 6 to 6n, the outputs of which are connected to the N AC/AC transformers 16-16n by means of buses 17 and 18 to 18n.

The N DC/DC converters 3, 4 to 4n are connected in parallel to one another by means of buses 11 and 12 to 12n. The N DC/DC converters 5 and 6 to 6n are connected in parallel to one another by means of buses 9 and 10 to 10n. The N DC/DC converters 3, 4 to 4n are connected in series, respectively, to the N DC/AC converters 5, 6 to 6n by means of the N buses 9, 11, 10 to 10n and 12 to 12n. The N buses 9, 11, 10 to 10n and 12 to 12n are joined by the N+1 DC power lines 13, 14 to 14i to 14n, and 15, wherein the DC power lines 14 to 14i to 14n are common to every other adjacent bus of the N buses 9, 11, 10 to 10n and 12 to 12n. That is, N connection buses are formed with N+1 DC power lines (13, 14 to 14i to 14n, and 15) and N-1 common DC power lines (14 to 14i to 14n) to the N buses, to connect each DC/DC converter of the N converters 3, 4 to 4n in series to each DC/AC converter of the N DC/AC converters 5 and 6 to 6n.

Figure 9 shows the same inverter with a DC/DC voltage boost converter of the present invention shown in Figure 7, but where the DC/DC converters 3 and 4 are galvanically isolated, and the common DC power transmission line 14 joining buses 11 and 12 is connected to ground 24. This allows DC voltage sources, such as photovoltaic fields, to work on the same common potential. For example, with the connection of the negative pole to ground 24 as shown in Figure 9.

Figure 10 shows the same inverter with a DC/DC voltage boost converter of the present invention shown in Figure 7, where the DC power transmission line 14 joining buses 11 and 12 is connected to ground 24. In the event of not using galvanically isolated DC/DC converters, an intermediate DC power transmission line 14 can be referenced to limit the maximum working potential with respect to ground 24 of the DC transmission lines and DC voltage sources, such as photovoltaic solar fields, for example.

The power flow through the inverter of the present invention will be explained with the help of Figures 11, 12, 13 and 14 a), b), c) and d).

Figure 11 shows a power flow in ideal operating conditions, where the photovoltaic fields 1 and 2, and therefore the DC/AC converters 5 and 6 connected to the three-phase AC distribution grid 19, are providing the same instantaneous energy P1 and P2. Power is distributed symmetrically (P1 = P2).

Continuing with Figure 11, the DC/AC converter 5 is providing the same power P1 as the DC/DC converter 3, this being the power supplied by the photovoltaic field 1. The same occurs with the DC/AC converter 6, the DC/DC converter 4, and the photovoltaic field 2, which supplies P2. The DC/AC converters 5 and 6 set the voltage in buses 9 and 10. The DC/DC converters 3 and 4 establish the voltage of the MPPT algorithm in buses 7 and 8. The *N* DC/DC converters implement *N* MPPT algorithms. At this working point, or nominal point (P1 = P2), no current appears in the common DC power line 14. The return current of the highest DC voltage level, supplied by the photovoltaic field 1 in bus 11, is offset by the current generated in bus 12 by the photovoltaic field 2. Since both photovoltaic fields are operating at the same power level, the total current in the common DC power line 14 is zero.

With the proposed topology, under ideal conditions, conduction losses that would occur in a system with two distributed buses are halved, without taking into account the increase in the working voltage values that the proposed topology admits. In addition, one less physical line is required for the case of three DC voltage levels.

The function of the common DC transmission line 14 is two-fold. On the one hand, it is used as a power transmitter (in the case of systems operating asymmetrically), and on the other hand, it allows the balancing of the voltages in buses 11 and 12.

Figures 12 and 13 show the power flow that takes place when a photovoltaic field reduces the power supplied to the inverter (P1>P2). For example, a temporary partial shade that occurs at time "t=1" second. The values shown in Figures 14 a), b), c) and d) correspond to parameters indicated in Figure 13.

In non-uniform working conditions, the balancing of the buses does not require any algorithm. When the DC/AC converters 5 and 6 set the same working voltage in buses 9 and 11, respectively, the power in DC/DC converter 3 will fall directly on DC/AC converter 5, analogous to converters 4 and 6.

The common DC power line 14 ensures that the voltage levels of buses 11 and 12 are equal to the voltage levels of buses 9 and 10. The current in the common DC power line 14 is the difference in DC current (in reference to the voltages of buses 11 and 12) between two sets of photovoltaic fields 1 and 2 placed in series and consecutively.

Conduction losses in the system will always be less than or equal to those existing with isolated systems. The worst case occurs when solar field 1 or solar field 2 are disabled, since in this case there would be no decrease in the current through the common DC power line 14.

As a result, a partial power flow in reference to conduction losses is obtained for the intermediate DC power lines (14 to 14i to 14n) for N+1 voltage levels. This power flow will depend on the difference in the working point of the DC/DC converters 3 and 4.

The present invention makes it possible to establish an optimal voltage design point in buses 9, 10, 11 and 12 that makes the voltage relationship between AC voltages (of the AC/AC transformer 16 and AC low-voltage lines 17 and 18) and DC voltages (of photovoltaic fields 1 and 2) independent. In this way, with the inverter of the present invention the objective of increasing the efficiency of the complete DC/AC energy conversion system (DC source, inverter and AC distribution grid) is met.

With the inverter of the present invention, it is also possible to expand the range of voltages with which photovoltaic fields 1 and 2 work. The upper limit of voltages designs in AC low-voltage lines 17 and 18, is determined by the working voltages in the input buses of the DC/AC converters 9 and 10, the latter being higher than in conventional DC/AC energy conversion systems from photovoltaic fields, or any DC source.

All this results in a design optimization on the AC side of the inverter, reducing conduction losses of the generation system.

## Claims

1. An inverter with a scalable DC/DC voltage boost converter, **characterized in that** it comprises:
• at least one AC/AC transformer (16);
• at least two DC/DC converters (3,4) connectable to corresponding DC voltage sources (1, 2) by means of corresponding buses (7,8); and
• at least two DC/AC converters (5,6) connected to the AC/AC transformer (16) by means of corresponding buses (17,18);
wherein the two DC/DC converters (3,4) are connected in parallel to one another, the two DC/AC converters (5,6) are connected in parallel to one another, and the two DC/DC converters (3,4) are connected in series with the two DC/AC converters (5,6) by means of two buses (11-9, 12-10) consisting of three DC power lines (13,14,15), wherein one of the DC power lines (14) is common to both buses (11-9, 12-10).

2. The inverter with a scalable DC/DC voltage boost converter according to claim 1, wherein it further comprises:
• N-2 DC/DC converters (4n) connectable to corresponding DC voltage sources (2n) by means of N-2 buses (8n);
• N-2 DC/AC converters (6n) connected to the AC/AC transformer (16) by means of N-2 buses (18n);
wherein the N-2 DC/DC converters (4n) are connected in parallel to one another and to the two DC/DC converters (3, 4); wherein the N-2 DC/AC converters (6n) are connected in parallel to one another and to the two DC/AC converters (5,6); and
wherein the N DC/DC converters (3, 4 to 4n) are connected in series to the N DC/AC converters (5, 6 to 6n) by means of respective N buses (9-11,10-12, 10n-12n) consisting of N+1 DC power lines (13,14-14n,15), of which N-1 DC power lines (14-14n) are common to every other bus of the N buses (9-11,10-12, 10n-12n).

3. The inverter with a scalable DC/DC voltage boost converter according to claim 1 or 2, wherein the DC/DC converters (3, 4, 4n) are galvanically isolated.

4. The inverter with a scalable DC/DC voltage boost converter according to claim 1, 2 or 3, wherein the bus (7,8,8n) that connects the DC/DC converters (3, 4, 4n) to the DC power sources (1, 2, 2n) has a pole to ground.

5. The inverter with a scalable DC/DC voltage boost converter according to any one of claims 1 to 4, wherein the common DC power line (14,14n) that connects the DC/DC converters (3, 4, 4n) to the DC/AC converters (5, 6 to 6n) is connected to ground.

6. The inverter with a scalable DC/DC voltage boost converter according to claim 1, wherein the at least one transformer (16) is a multi-winding transformer with one winding for each DC/AC converter (5, 6 to 6n).

7. The inverter with a scalable DC/DC voltage boost converter according to any one of claims 1 to 3, wherein the DC/DC converters (3, 4, 4n) are individually controlled by "MPPT" algorithms.

8. The inverter with a scalable DC/DC voltage boost converter according to claim 1 or 2, wherein the DC voltage sources (1,2) are selected from wind plants, photovoltaic plants and storage plants.
